Europäisches Patentamt

European Patent Office

Office européen des brevets

(19)

(11) Numéro de publication: **0 022 020**
**B1**

(12) **FASCICULE DE BREVET EUROPEEN**

(45) Date de publication du fascicule du brevet: **09.02.83**

(21) Numéro de dépôt: **80400948.8**

(22) Date de dépôt: **25.06.80**

(51) Int. Cl.³: **A 47 J 27/09,**
**A 47 J 27/62, F 16 K 31/48**

(54) Dispositif limiteur de pression pour un appareil ménager fonctionnant sous pression.

(30) Priorité: **03.07.79 FR 7917193**

(43) Date de publication de la demande:
**07.01.81 Bulletin 81/1**

(45) Mention de la délivrance du brevet:
**09.02.83 Bulletin 83/6**

(84) Etats contractants désignés:
**AT BE CH DE GB IT LI LU NL SE**

(56) Documents cités:
**DE - A - 2 257 696**
**DE - B - 1 191 192**
**FR - A - 2 391 685**
**FR - E - 67 030**
**US - A - 2 472 451**
**US - A - 3 590 871**

(73) Titulaire: **SEB S.A. Société Anonyme française**
**F-21260 Selongey (FR)**

(72) Inventeur: **Loiseau, Bernard**
**5 rue du Rosoir**
**F-21000 Dijon (FR)**

(74) Mandataire: **Bouju, André**
**38 Avenue de la Grande Armée**
**F-75017 Paris (FR)**

Courier Press, Leamington Spa, England.

Dispositif limiteur de pression pour un appareil ménager fonctionnant sous pression

La présente invention concerne un dispositif limiteur de pression pour un appareil ménager à vapeur sous pression, tel qu'un autocuiseur.

On connaît des soupapes pour autocuiseurs comprenant un corps de soupape comportant un évidement destiné à coiffer l'ajutage de sortie de la vapeur de cuison de l'autocuiseur. Cet évidement comporte un pointeau formant clapet d'obturation pour cet ajutage de sortie. Le corps de soupape renferme un lest prenant appui sur le pointeau, le poids de ce lest étant calculé pour déterminer la pression de fonctionnement de cette dernière.

Lorsque la pression de la vapeur de cuisson atteint la valeur désirée, qui est généralement égale à 1,5 bar, la force exercée par la vapeur sur le pointeau soulève ce dernier en permettant à la vapeur de s'échapper vers l'extérieur.

Cette soupape règle ainsi la pression de la vapeur à la valeur désirée, jusqu'en fin de cuisson. A ce moment, l'utilisateur, avant d'ouvrir le couvercle de l'autocuiseur, agit manuellement sur la soupape pour permettre à la vapeur de s'échapper librement à l'extérieur par l'ajutage de sortie.

L'échappement de cette vapeur est obtenu, suivant le cas, soit en retirant complètement la soupape de l'ajutage de sortie de la vapeur, soit en actionnant mécaniquement la soupape, par exemple au moyen d'un levier ou d'un bouton de commande, pour écarter le pointeau de l'ajutage de sortie de la vapeur.

Pour contrôler le temps de cuisson, l'utilisateur a généralement recours à une minuterie indépendante de l'autocuiseur qu'il met en route dès que la vapeur de cuisson atteint la valeur requise, c'est-à-dire dès que la vapeur s'échappe de la soupape. La fin du temps de cuisson est généralement signalée par une sonnerie de la minuterie. A cet instant, l'utilisateur doit intervenir et mettre la soupape en position d'échappement libre de la vapeur.

L'inconvénient de cette façon d'utiliser un autocuiseur tient au fait que l'utilisateur est contraint de rester à proximité de la minuterie, pour pourvoir entendre la sonnerie de cette dernière et arrêter à temps la cuisson.

On connaît également selon l'US — A — 3 590 871 un dispositif limiteur de pression, comprenant une soupape qui comporte un évidement destiné à coiffer l'ajutage de sortie de la vapeur de l'appareil, cet évidement comportant un clapet d'obturation constitué par une bille pour cet ajutage de sortie. Ce dispositif comprend en outre une minuterie séparée de cette soupape et coopérant avec celle-ci pour la mettre en position d'échappement de la vapeur au bout d'une durée déterminée. Cette minuterie comporte à cet effet un arbre rotatif de réglage de la durée, qui comporte des moyens coopérant avec le clapet d'obturation pour écarter celui-ci de l'ajutage de sortie, lorsque le temps préréglé sur la minuterie est écoulé.

Ce dispositif est compliqué. De plus, en raison de la liaison mécanique qui existe avec la minuterie, la soupape n'est pas amovible par rapport au couvercle ou au récipient ce qui constitue un grave inconvénient. En effet, il est impossible ainsi d'accéder aux parties internes de la soupape et à l'ajutage de sortie de la vapeur, par exemple pour entretenir ces parties. De plus, il n'est pas possible de faire fonctionner de tels autocuiseurs avec un soupape rotative classique c'est-à-dire sans minuterie.

Le but de la présente invention est de remédier aux inconvénients du dispositif limiteur de pression précité.

Suivant l'invention, ce dispositif est caractérisée en ce que la minuterie est logée à l'intérieur du corps de soupape et constitue le lest de cette dernière, le clapet d'obturation est formé par un pointeau, le corps de soupape muni de tous les éléments précités, forme un ensemble compact du type soupape facilement amovible de l'ajutage de sortie de la vapeur, en position fermée de la soupape celle-ci prend appui uniquement sur l'ajutage par l'intermédiaire du pointeau réalisant ainsi l'obturation, en position ouverte de la soupape celle-ci prend appui par une partie du corps de soupape sur une partie extérieure à la soupape, le pointeau ayant été déplace par la minuterie de manière à n'être plus en appui sur l'ajutage réalisant ainsi l'ouverture de ce dernier.

Le fait que la minuterie soit contenue dans la soupage en remplaçant ainsi le lest, permet d'obtenir une soupape de construction simple et compacte. L'ensemble constitué par la soupape et la minuterie constitue un organe indissociable qui se met en place sur l'ajutage de sortie de la vapeur, et s'en enlève très aisément, sans aucune opération mécanique préliminaire.

Par ailleurs, à la fin de la course de rotation de l'arbre de la minuterie, ce dernier agit sur le pointeau et l'écarte de l'ajutage de sortie, en permettant ainsi à la vapeur de cuisson de s'échapper librement de cet ajutage.

Ainsi, dans le cas d'un autocuiseur, la durée de la cuisson ne risque pas d'être trop longue. L'utilisateur peut, de ce fait, s'absenter pendant la cuisson, pourvu qu'il ait en début de cuisson préréglé la minuterie suivant le temps de cuisson désiré.

De plus, du fait du caractère amovible de la soupape du dispositif conforme à l'invention, un autocuiseur peut fonctionner indifféremment avec un tel dispositif ou avec soupape rotative classique.

D'autres poarticularités et avantages de l'invention apparaîtront encore dans la description ci-après.

Aux dessins annexés, donnés à titre d'exemples non limitatifs:

la figure 1 est une vue en perspective de la soupape conforme à l'invention;

la figure 2 est une vue en coupe longitudinale de la soupape, cette dernière étant en position initiale ou de fin de course de la minuterie;

la figure 3 est une vue en coupe suivant le plan III—III de la figure 2, le bouton de réarmement et de réglage de la minuterie ayant subi une rotation de 270° par rapport à sa position de la figure 2;

la figure 4 est une vue de dessus de la soupape;

la figure 5 est une vue développée sur un plan de l'une des gorges d'engagement de la came montée sur l'arbre de la minuterie.

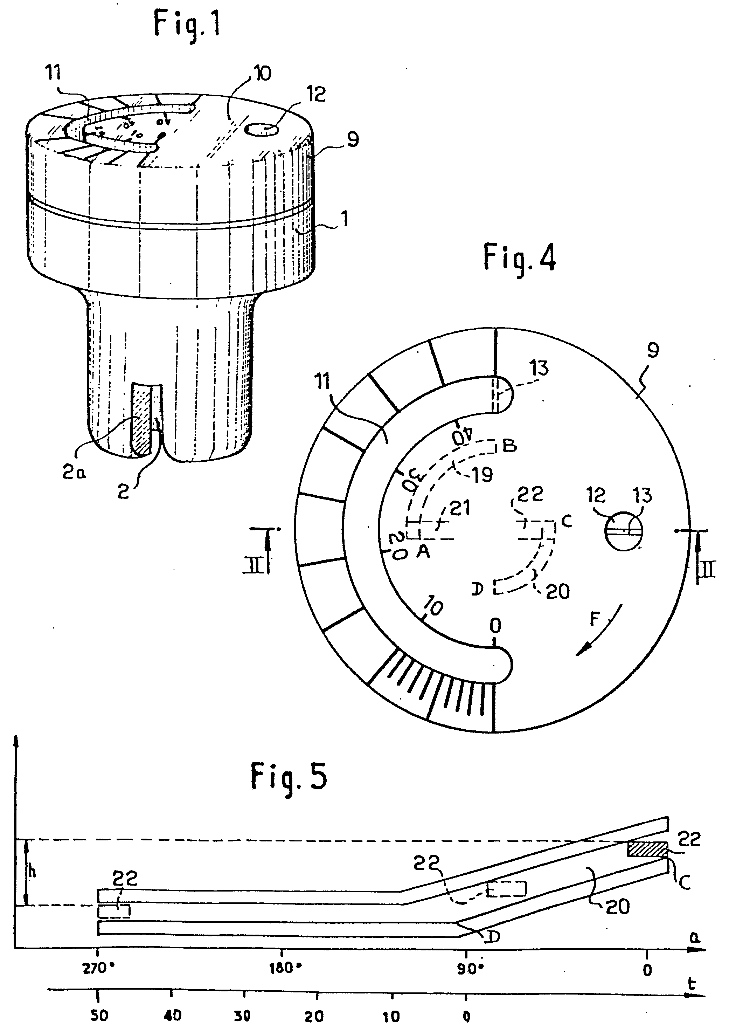

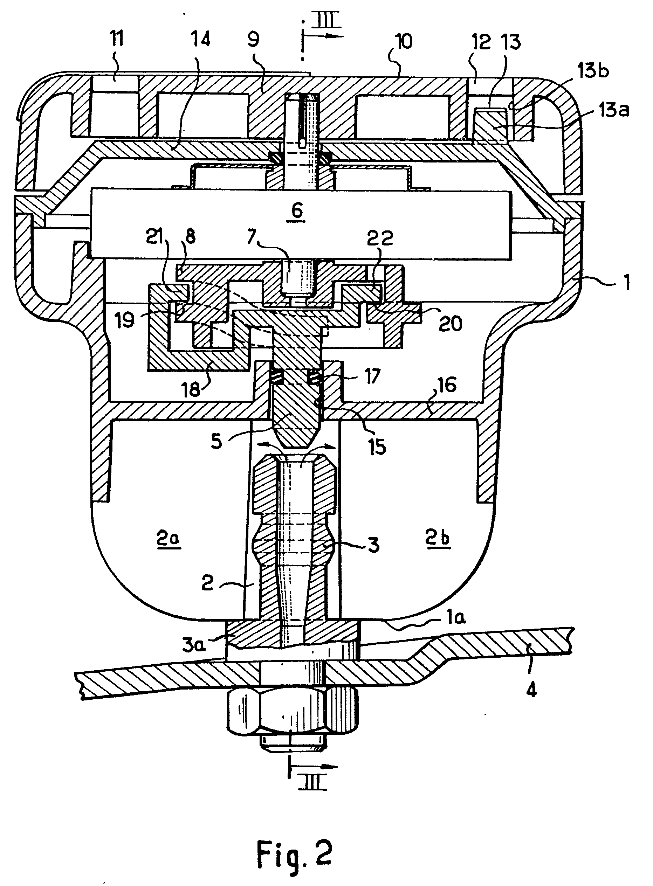

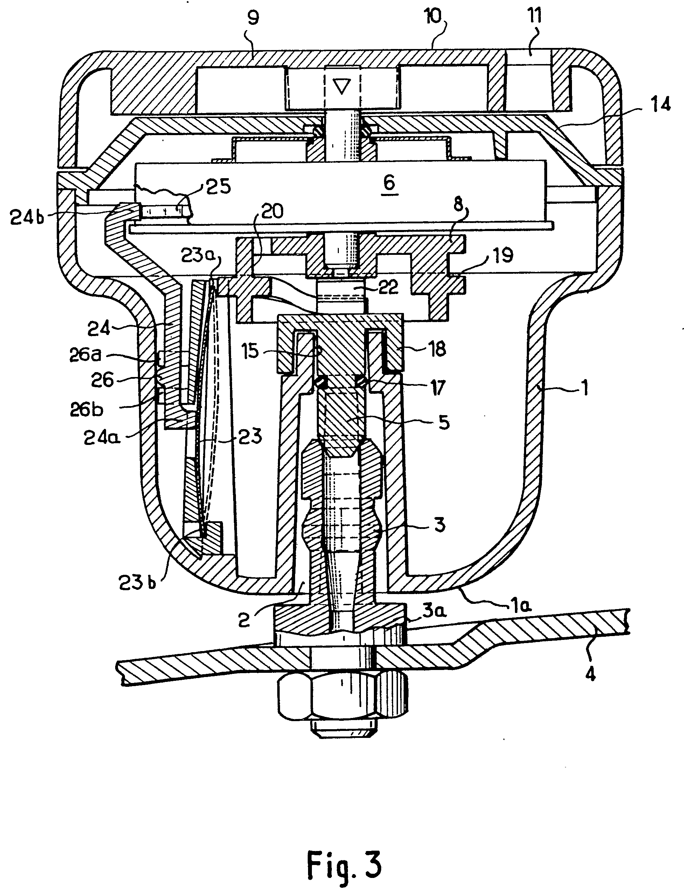

Dans la réalisation représentée sur les figures 1 à 4, la soupape pour autocuiseur comprend un corps de soupape 1 creux comportant un évidement cylindrique 2 ouvert en 2a et 2b sur deux côtés opposés de la paroi latérale de ce corps 1, la partie cylindrique 2 coiffant l'ajutage de sortie 3 de la vapeur de cuisson monté sur le couvercle 4 d'un autocuiseur (voir figures 2 et 3).

A l'intérieur de l'évidement 2 fait saillie un pointeau 5 formant clapet d'obturation pour l'ajutage de sortie 3.

L'intérieur du corps de soupape 1 est lesté suivant un poids déterminant la pression de fonctionnement de la soupape, égale par exemple à 1,5 bar. Cette pression de fonctionnement est atteinte pour la valeur permettant le soulèvement du pointeau 5 de l'ajutage de sortie 3, et par suite, l'échappement de la vapeur par cet ajutage.

Conformément à l'invention, le corps de soupape 1 renferme en tant que lest, une minuterie 6 réglable en fonction du temps de cuisson désiré.

Cette minuterie 6 comprend un arbre de sortie 7 portant des moyens qui coopèrent avec le pointeau 5 pour écarter celui-ci de l'ajutage de sortie 3 lorsque le temps de cuisson préréglé sur la minuterie 6 est écoulé.

Dans la réalisation représentée, ces moyens comprennent une came 8 qui coopère à la fin de la course de rotation de l'axe 7 avec le pointeau 5 pour le soulever par rapport à l'ajutage de sortie 3, comme on le verra plus en détail plus loin.

Dans l'exemple représenté, la minuterie 6 occupe un volume sensiblement cylindrique et relativement plat et l'arbre 7 est aligné avec l'axe du pointeau 5. De plus, la soupape 1 est un volume de révolution autour d'un axe qui est confondu avec celui du pointeau 5 et de l'arbre de sortie 7 de la minuterie 6.

L'arbre de sortie 7 de la minuterie 6 est, en outre, rendu solidaire d'un bouton de réarmement 9 et de préréglage de la minuterie 6. Ce bouton 9 est monté à la partie supérieure du corps de soupape 1, au-dessus de la minuterie 6. Ce bouton de réarmement 9 de la minuterie présente une surface extérieure 10 qui est située exactement dans le prolongement de la surface extérieure du corps de soupape 1.

La surface extérieure 10 du bouton 9 présente une fenêtre 11 en forme de croissant (voir figure 4) qui s'étend sur un peu plus de 180° autour de l'axe de rotation de l'arbre 7 de la minuterie 6. Cette fenêtre 11 est adjacente à un cadran comprenant des graduations comprises entre 0 et 40 correspondant au temps en minute de préréglage de la minuterie 6. De l'autre côté de cette fenêtre 11, et à 90° de la graduation 0, se trouve une ouverture circulaire 12 sous laquelle apparaît un index 13. Cet index 13 est porté par une saillie 13a ménagée sur une paroi 14 du corps de soupape 1 située sous le bouton 9 (voir figure 2). Cette saillie 13a est engagée dans une rainure circulaire 13b centrée sur l'axe de rotation du bouton 9 et ménagée sur la face interne de ce dernier. Dans la position indiquée sur les figures 2 et 4, cet index 13 repère la position d'origine du corps de soupape 1 par rapport au bouton de commande 9, ou sa position de préréglage après rotation d'un certain angle à partir de la position d'origine précitée.

Le préréglage de la minuterie 6 est réalisé en tournant le bouton 9 par rapport au corps de la soupape 1 de commande 9, à partir de la position initiale précitée, dans le sens de la flèche F de la figure 4. On amène ainsi l'index 13 en face de la graduation correspondant à la durée de fonctionnement choisie.

Le décomptage du temps s'effectue ensuite au moyen du mécanisme de la minuterie par rotation du bouton de commande 9 en sens inverse, jusqu'à ce que l'index 13 revienne à sa position initiale indiquée sur la figure 4. Lors de cette rotation après que l'index 13 ait atteint la position 0 du cadran, le déplacement de l'index 13 s'effectue à grande vitesse jusqu'à la position d'origine, selon la figure 4. Ces dispositions et ce fonctionnement sont classiques dans le cas de certaines minuteries.

Sur la figure 2, on voit que le pointeau 5 est monté coulissant dans une jupe interne 15 rendue solidaire du corps de soupape 1 par un voile continu 16. Ce pointeau 5 est bloqué en rotation par rapport à la jupe 15 par deux nervures non représentées. Le pointeau 5 porte, d'autre part, un joint 17 pour réaliser l'étanchéité de la jupe 15 entre l'évidement 2 et la partie supérieure du corps de soupape 1 renfermant la minuterie 6. Cette minuterie 6 est ainsi protégée de la vapeur sous pression sortant de l'ajutage 3.

Dans la réalisation représentée, le pointeau 5 comporte à son extrémité opposée par rapport à l'ajutage de sortie 3, une contre-came 18 coopérant avec la came 8 rendue solidaire de l'arbre 7 de la minuterie 6.

La came 8 présente deux gorges 19, 20, situées à 180° l'une de l'autre et à des distances différentes de l'arbre 7. Dans la position indiquée sur la figure 2, des doigts 21, 22 de la contre-came 18 sont engagés dans les gorges 19, 20. La gorge 20 la plus proche de l'arbre 7 est ouverte vers ce dernier, tandis que la gorge 21 la plus éloignée est ouverte vers l'extérieur de la came 8. Chacune des gorges 19, 20 présente une pente AB, CD, s'étendant suivant un arc de 90° autour de l'axe de rotation de la came 8. Le sommet A, C de chaque pente correspond à la position initiale du bouton de réglage 9 de la minuterie 6 (voir figures 4 et 5). Ces pentes AB, CD permettent une levée $h$ du pointeau 5 par rapport à l'ajutage de sortie 3.

La soupape représentée sur les figures 2 et 3 comprend, en outre, des moyens pour commander la mise en route de la minuterie 6 lorsque la pression de la vapeur atteint la valeur désirée de fonctionnement de cette soupape. Ces moyens comprennent une bilame 23 (voir figure 3) logée à l'intérieur du corps de soupape 1 à proximité de l'évidement 2 et sensiblement parallèlement à ce dernier. Cette bilame 23 est dite "à retournement brusque". Elle présente une surface courbe et ses extrémités opposées 23a et 23b sont fixées au corps de soupape 1. La surface courbe de la bilame 23 prend appui contre l'extrémité 24a d'un levier 24 dont l'extrémité opposée 24b constitue une butée pour le balancier 25 du mécanisme de la minuterie 6, qui tend à repousser le levier 24 vers l'extérieur. Dans la position de la figure 3, le levier 24 bloque le mécanisme de la minuterie 6. Le levier 24 est articulé grâce à un bossage 26 qui prend appui contre la paroi latérale du corps de soupape 1. De plus, ce levier 24 est tenu au niveau du bossage 26 dans une fourche 26a et 26b. De part sa forme, le centre de gravité du levier 24 est situé au-delà de la fourche 26a, 26b vers l'extérieur du corps de soupape.

La bilame 23 est de structure connue en soi. Elle comprend, sur sa face concave, un alliage métallique présentant un coefficient de dilatation plus grand que celui de l'alliage métallique situé sur sa face convexe. Ainsi, sous l'effet de la dilatation thermique différenciée entre ces deux alliages, on observe, à une certaine température de la bilame 23, une inversion brusque de sa courbure, comme indiqué en pointillé sur la figure 3. Dans l'exemple considéré, cette inversion se produit vers 80°C.

Le fonctionnement de la soupape conforme à l'invention est le suivant:

Au début ou avant une cuisson, les organes de la soupape sont dans la position indiquée sur la figure 2. L'index 13 apparaît sous l'ouverture 12 de la face supérieure 10 du bouton de réarmement et de réglage 9 de la minuterie 6. Les doigts 21, 22 et la contre-came 18 sont engagés dans les gorges 19, 20 de la came 8, aux points A et C les plus hauts de ces dernières. La bilame 23 est dans la position indiquée de la figure 3, sa face concave étant en appui élastique contre le levier 24. Si la soupape est posée sur l'ajutage, le pointeau 5 est alors écarté de celui-ci et la partie inférieure la du corps de soupape 1 repose sur l'embase 3a de l'ajutage de sortie 3.

Pour prérégler le temps de cuisson, par exemple au temps maximum, c'est-à-dire 45 minutes, on fait tourner le corps de soupape 1 par rapport au bouton 9 de réarmement et de préréglage de la minuterie 6, dans le sens de la flèche F (voir figure 4), jusqu'à ce que l'index 13 occupe la position représentée en pointillé. Les doigts 21, 22 de la contre-came 18 se dégagent des parties en pente AB, CD des gorges 19, 20 de la came 8 lorsque l'angle de rotation $a$ (voir figure 5) à partir de la position initiale, atteint 90°. Durant ce mouvement, la contre-came 18 et le pointeau 5 s'abaissent. Pendant la phase d'obturation, les doigts 21, 22 restent guidés dans la partie horizontale des gorges 19, 20, la soupape étant placée sur l'ajutage 3 et le pointeau 5 prenant appui sur celui-ci comme indiqué sur la figure 3. Cet appui est maintenu pour toutes les positions de réglage de la minuterie, c'est-à-dire pour toutes les positions de l'index 13 comprises entre 0 et 45 minutes.

Cette opération étant terminée, l'autocuiseur peut être laissé en l'état, sans surveillance. La pression de la vapeur de cuisson monte à l'intérieur de l'autocuiseur jusqu'à l'obtention de la pression de fonctionnement de la soupape qui correspond au soulèvement du pointeau 5. La vapeur de cuisson peut alors s'échapper à l'extérieur à un débit contrôlé par l'ajutage de sortie 3. Le jet de vapeur formé porte rapidement l'espace environnant la bilame 23 à une température égale à environ 80°C. A ce moment, la courbure de la bilame 23 s'inverse, comme indiqué en pointillé sur la figure 3. Le levier 24 bascule vers l'extérieur et son extrémité 24b libère le balancier 25 qui, de ce fait, déverrouille le mécanisme de la minuterie 6.

La minuterie 6 est ainsi mise en route automatiquement. Elle décompte le temps de cuisson préréglée jusqu'au temps 0. Lorsque l'index 13 atteint le temps 0, la vitesse de rotation de l'arbre 7 devient très rapide jusqu'à ce que l'index 13 atteigne la position initiale indiquée sur la figure 2. Lors du déplacement angulaire de l'index 13 entre le temps 0 et la position initiale précitée, les doigts 21, 22 de la contre-came 18 sont soulevés progressivement par engagement dans les gorges 19, 20 de la came 8. Le pointeau 5 se soulève en même temps que la contre-came 18. En fin de mouvement, la partie inférieure la du corps de soupape 1 repose sur l'embase 3a de l'ajutage de sortie 3. Le pointeau 5 étant dégagé de l'ajutage de sortie 3, la vapeur peut s'échapper librement à l'extérieur par l'évidement 2 et la pression régnant à l'intérieur de l'autocuiseur est ramenée rapidement à la valeur de la pression atmosphérique. La cuisson des aliments contenus dans l'autocuiseur est alors pratiquement stoppée. Après échappement complet de la vapeur, l'espace environnant la bilame 23 se refroidit rapidement et cette dernière s'inverse à nouveau pour retrouver la position active selon la figure 3 dans laquelle le levier 24 bloque le mécanisme de la minuterie 6.

Bien entendu, l'invention n'est pas limitée à l'exemple de réalisation que l'on vient de décrire, et on peut apporter à celui-ci de nombreuses modifications sans sortir du cadre de l'invention.

Ainsi, la minuterie 6 pourrait être placée différemment dans le corps de soupape 1, pourvu que son arbre 7 porte une came susceptible de coopérer avec le pointeau 5 pour l'écarter de l'ajutage de sortie 3.

La came 8 et la contre-came 18 pourraient présenter un profil différent. En fin de cuisson, c'est-à-dire en position d'échappement libre de la vapeur, la partie inférieure 1a du corps de soupape 1 pourrait reposer directement sur le couvercle 4 de l'autocuiseur.

La bilame 23 peut bien entendu être remplacée par tout autre organe susceptible de libérer le mécanisme de la minuterie 6 sous l'effet de la vapeur s'échappant de l'ajutage 3. Ainsi, cet organe pourrait être un capteur de pression.

La soupape conforme à l'invention peut être utilisée dans des appareils ménagers fonctionnant sous pression autres qu'un autocuiseur, tels que caferière sous pression ou friteuse.

**Revendications**

1. Dispositif limiteur de pression pour un appareil ménager fonctionnant sous pression, tel qu'un autocuiseur, comprenant une soupape (1) qui comporte un évidement (2) destiné à coiffer l'ajutage de sortie (3) de la vapeur de l'appareil, cet évidement (2) comportant un clapet d'obturation pour cet ajutage de sortie, cette soupape (1) renfermant un lest dont le poids détermine la pression de fonctionnement de cette dernière, le dispositif comprenant en outre une minuterie (6) comportant un arbre rotatif (7) de réglage de la durée, qui comporte des moyens (8) coopérant avec le clapet d'obturation pour écarter celui-ci de l'ajutage de sortie (3) et permettre l'échappement de la vapeur, lorsque le temps préréglé sur la minuterie (6) est écoulé, caractérisé en ce que la minuterie est logée à l'intérieur du corps de soupape (1) et constitue le lest de cette dernière, le clapet d'obturation est formé par un pointeau (5), le corps de soupape (1), muni de tous les éléments précités, forme un ensemble compact du type soupape facilement amovible de l'ajutage de sortie de la vapeur, en position fermée de la soupape celle-ci prend appui uniquement sur l'ajutage (3) par l'intermédiaire du pointeau (5) réalisant ainsi l'obturation, en position ouverte de la soupape celle-ci prend appui par une partie (1a) du corps de soupape sur une partie (3a) extérieure à la soupape, le pointeau (5) ayant été déplacé par la minuterie de manière à n'être plus en appui sur l'ajutage (3) réalisant ainsi l'ouverture de ce dernier.

2. Dispositif limiteur de pression conforme à la revendication 1, comportant des moyens pour commander la mise en route de la minuterie, caractérisé en ce que ces moyens comprennent un organe (23) déformable sous l'effet de la température de la vapeur s'échappant de l'ajutage de sortie (3), cet organe étant associé à un levier (24) constituant une butée de verrouillage du mécanisme de la minuterie (6), la déformation de cet organe (23) ayant pour effet de libérer cette butée par rapport à ce mécanisme.

3. Dispositif conforme à la revendication 2, caractérisé en ce que l'organe précité est constitué par une bilame (23) dite "à retournement brusque", présentant une surface courbe en appui élastique contre un levier (24) bloquant le mécanisme de la minuterie (6), la courbure de cette surface de la bilame pouvant s'inverser brusquement lorsque la température désirée est atteinte, de façon à libérer le mécanisme de la minuterie.

4. Dispositif conforme à l'une quelconque des revendications 1 à 3, caractérisé en ce que le corps de soupape (1) comporte une jupe interne (15) dans laquelle est monté de façon coulissante le pointeau (5).

5. Dispositif conforme à l'une quelconque des revendications 1 à 4, caractérisé en ce que la minuterie (6) occupe un volume sensiblement cylindrique et relativement plat, l'arbre (7) de la minuterie étant aligné avec l'axe du pointeau (5).

6. Dispositif conforme à la revendication 5, caractérisé en ce qu'il présente une forme de révolution et en ce que l'axe dispositif est confondu avec l'axe de la minuterie (6) et du pointeau (5).

7. Dispositif conforme à l'une quelconque des revendications 4 à 6, caractérisé en ce que le pointeau (5) est bloqué en rotation par rapport à la jupe (15), et comporte, à son extrémité opposée par rapport à l'ajutage (3), une contre-came (18) coopérant avec une came (8) rendue solidaire de l'arbre de sortie (7) de la minuterie (6).

8. Dispositif conforme à la revendication 7, caractérisé en ce que la came (8) comporte une surface d'appui annulaire (19, 20) recevant un doigt (21, 22) de la contre-came (18), cette surface d'appui présentant une pente dont le sommet (C) correspond à la position initiale du bouton de réglage (9) de la minuterie (6).

9. Dispositif conforme à la revendication 8, caractérisé en ce que la came comporte deux gorges (19, 20) situées à 180° l'une de l'autre, à des distances différentes de l'axe de la minuterie (6), et en ce que la contre-came (18) présente deux doigts opposés (21, 22) destinés à s'engager dans lesdites gorges, chacune des gorges présentant une pente s'étendant suivant un arc de 90° autour de l'axe de rotation de la came (8), le sommet (C) de chacune des pentes correspondant à la position initiale du bouton de réglage (9) de la minuterie (6).

10. Dispositif conforme à la revendication 9, caractérisé en ce que l'une (20) des gorges de la came (8) est ouverte vers l'arbre (7) de la minuterie (6) et l'autre gorge (21) est ouverte vers l'extérieur de cet arbre.

11. Dispositif conforme à l'une quelconque des revendications 1 à 10, caractérisé en ce que la minuterie est logée dans un compartiment étanche par rapport à l'évidement dans lequel s'échappe la vapeur de cuisson.

## Patentansprüche

1. Druckbegrenzungsvorrichtung für ein unter Druck arbeiten-des Haushaltsgerät wie einen Schnellkochtopf, mit einem Ventil (1), das einen Hohlraum (2) zum Abdecken der Damfaustrittsdüse (3) des Gerätes aufweist, wobei dieser Hohlraum (2) einen Verschlußkörper für diese Austrittsdüse aufweist, wobei ferner in dem Ventil (1) eine Masse eingeschlossen ist, deren Gewicht den Funktionsdruck des Ventils bestimmt, und mit einem Uhrwerk (6), das eine drehbare Welle (7) für die Einstellung der Kochdauer umfaßt und Mittel (8) aufweist, die mit dem Verschlußkörper zusammenwirken, um diesen von der Austrittsdüse (3) zu entfernen und den Dampfaustritt zu gestatten, wenn die zuvor auf dem Uhrwerk (6) eingestellte Zeit abgelaufen ist, dadurch gekennzeichnet, daß das Uhrwerk im Inneren des Ventilkörpers (1) angeordnet ist und die Masse desselben bildet, der Verschlußkörper durch eine Düsennadel (5) gebildet ist, der Ventilkörper des Ventils (1), der mit sämtlichen vorgenannten Elementen versehen ist, eine kompakte Ventileinheit bildet, die leicht von der Dampfaustrittsdüse abnehmbar ist, das Ventil in seiner Schließstellung sich nur über die Düsennadel (5) auf der Düse (3) abstützt und auf diese Weise den Verschluß herstellt, das Ventil in seiner Öffnungsstellung über einen Teil (1a) des Ventilkörpers sich auf einem auf der Außenseite des Ventils befindlichen Teil (3a) abstützt und die Düsennadel (5) dabei durch das Uhrwerk so verschoben wurde, daß sie sich nicht mehr auf der Düse (3) abstützt und so die Öffnung derselben bewirkt.

2. Druckbegrenzungsvorrichtung nach Anspruch 1, mit Mitteln zum Steuern des Ingangsetztens des Uhrwerks, dadurch gekennzeichnet, daß diese Mittel ein unter der Einwirkung der Temperatur des aus der Dampfaustrittsdüse (3) ausströmenden Dampfes verformbares Organ (23) enthalten, das einem Hebel (24) zugeordnet ist, der einen Verriegelungsanschlag für den Mechanismus des Uhrwerks (6) bildet, wobei die Deformierung dieses Organs (23) die Freigabe dieses Anschlags in bezug auf diesen Mechanismus bewirkt.

3. Druckbegrenzungsvorrichtung nach Anspruch 2, dadurch gekennzeichnet, daß das genannte Organ aus einem Bimetallstreifen (23) "mit plötzlicher Verformungsumkehr" besteht, der mit einer gekrümmten Oberfläche an dem Hebel (24) elastisch anliegt und den Mechanismus des Uhrwerks (6) sperrt, wobei die Krümmung dieser Oberfläche des Bimetallstreifens sich plötzlich umkehren kann, wenn die gewünschte Temperatur erreicht ist, so daß der Mechanismus des Uhrwerks freigegeben wird.

4. Vorrichtung nach einem der Ansprüche 1 bis 4, dadurch gekennzeichnet, daß der Ventilkörper des Ventils (1) eine innere Buchse (15) aufweist, in der die Düsennadel (5) verschiebbar angeordnet ist.

5. Vorrichtung nach einem der Ansprüche 1 bis 4, dadurch gekennzeichnet, daß das Uhrwerk (6) ein im wesentlichen zylindrisches und relativ flaches Volumen einnimmt und die Welle (7) des Uhrwerks mit der Achse der Düsennadel (5) fluchtet.

6. Vorrichtung nach Anspruch 5, dadurch gekennzeichnet, daß sie eine rotationssymmetrische Form aufweist und daß die Achse der Vorrichtung mit der Achse des Uhrwerks (6) und der Düsennadel (5) zusammenfällt.

7. Vorrichtung nach einem der Ansprüche 4 bis 6, dadurch gekennzeichnet, daß die Düsennadel (5) drehfest in bezug auf die Buchse (15) blockiert ist und an ihrem von der Düse (3) abgewandten Ende einen Hakennocken (18) trägt, der mit einer mit der Austrittswelle (7) des Uhrwerks (6) fest verbundenen Kurvenbahn (8) zusammenwirkt.

8. Vorrichtung nach Anspruch 7, dadurch gekennzeichnet, daß die Kurvenbahn (8) eine ringförmige Anlagefläche (19, 20) aufweist, die einen Daumen (21, 22) des Hakennockens (18) aufnimmt, wobei diese Anlagefläche eine Steigung aufweist, deren Scheitel (C) der Anfangsstellung des Einstellknopfes (9) des Uhrwerks (6) entspricht.

9. Vorrichtung nach Anspruch 8, dadurch gekennzeichnet, daß die Kurvenbahn (8) zwei zueinander um 180° versetzte und von der Achse des Uhrwerks (6) in verschiedenem Abstand befindliche Nuten (19, 20) aufweist und daß der Hakennocken (18) zwei einander gegenüberliegende, in die Nuten eingreifende Daumen (21, 22) aufweist, wobei jede der Nuten eine sich über einen Kreisbogen von 90° um die Drehachse der Kurvenbahn (8) erstreckende Steigung aufweist und wobei der Scheitel (C) jeder dieser Steigungen der Anfangsstellung des Einstellknopfes (9) des Uhrwerks (6) entspricht. gungen der Anfangsstellung des Einstellknopfes (9) des Uhrwerks (6) entspricht.

10. Vorrichtung nach Anspruch 9, dadurch gekennzeichnet, daß die eine (20) der Nuten der Kurvenbahn (8) zu der Welle (7) des Uhrwerks (6) hin geöffnet ist und die andere Nut (21) zur Außenseite dieser Welle hin offen ist.

11. Vorrichtung nach einem der Ansprüche 1 bis 10, dadurch gekennzeichnet, daß das Uhrwerk in einer Kammer angeordnet ist, die gegenüber dem Raum, in den der Kochdampf ausströmt, abgedichtet ist.

## Claims

1. A pressure limiting device for household apparatus operating under pressure, such as a pressure cooker, comprising a valve (1) which has a recess (2) for covering the nozzle (3) through which the steam leaves the apparatus, this recess (2) comprising a flap valve for closing the outlet nozzle, this valve (1) containing ballast whose weight determines the operating pressure thereof, the device further comprising a timer (6) comprising a rotary shaft (7) for adjusting the duration, which comprises means (8) cooperating with the flap valve for separating this latter from the outlet nozzle (3) and allowing the steam to escape, when the time preset on the timer (6) has passed, characterized in that the timer is housed inside the valve body (1) and forms the ballast thereof, the closing-off valves is formed by a needle (5), the body valve (1), having all the above-mentioned elements, forms a compact assembly of the valve type which may be easily removable from the nozzle through which the steam leaves, in the closed position of the valve this latter bears solely on the nozzle (3) through the needle (5) thus closing it off, in the open position of the valve this latter bears through a part (1a) of the valve body on a part (3a) external to the valve, the needle (5) having been moved by the timer so as to bear no longer on the nozzle (3) thus providing opening thereof.

2. The pressure limiting device according to claim 1, comprising means for controlling the starting of the timer, characterized in that these means comprise a member (23) deformable under the effect of the temperaturer of the steam escaping from the outlet nozzle (3), this member being associated with a lever (24) forming a stop for locking the mechanism of the timer (6), deformation of this member (23) resulting in freeing this stop with respect to this mechanism.

3. The device according to claim 2, characterized in that the above-mentioned member is formed by a so-called 'rapid reversal' bimetal strip (23) having a curved surface bearing resiliently against a lever (24) locking the mechanism of the timer (6), the curvature of this surface of the bimetal strip being sharply reversible when the desired temperature is reached so as to free the mechanism of the timer.

4. The device according to any one of claims 1 to 3, characterized in that the valve body (1) comprises an internal skirt (15) in which the needle (5) is slidably mounted.

5. The device according to any one of claims 1 to 4, characterized in that the timer (6) occupies a substantially cylindrical and relatively flat volume, the shaft (7) of the timer being aligned with the axis of the needle (5).

6. The device according to claim 5, characterized in that it has a shape of revolution and in that the axis of the device merges with the axis of the timer (6) and the needle (5).

7. The device according to any one of claims 4 to 6, characterized in that the needle (5) is secured against rotation with respect to the skirt (15) and comprises, at its opposite end with respect to the nozzle (3), a counter-cam (18) cooperating with a cam (8) integral with the output shaft (7) of the timer (6).

8. The device according to claim 7, characterized in that the cam (8) has an annular bearing surface (19, 20) receiving a finger (21, 22) of the counter-cam (18), this bearing surface having a slope whose top (C) corresponds to the initial position of the adjustment knob (9) of the timer (6).

9. The device according to claim 8, characterized in that the cam has two grooves (19, 20) situated at 180° from each other, at different distances from the axis of the timer (6), and in that the counter-cam (18) has two opposite fingers (21, 22) for engaging in said grooves, each of the grooves having a slope extending along an arc of 90° about the axis of rotation of the cam (8), the top (C) of each of the slopes corresponding to the initial position of the adjustment knob (9) of the timer (6).

10. The device according to claim 9, characterized in that one (20) of the grooves of the cam (8) is open towards the shaft (7) of the timer (6) and the other groove (21) is open towards the outside of this shaft.

11. The device according to any one of claims 1 to 10, characterized in that the timer is housed in a compartment which is sealed with respect to the recess into which the cooking vapour escapes.

Fig.1

0 022 020

Fig. 4

Fig. 5

Fig. 2

Fig. 3